# EUROPEAN PATENT APPLICATION

(11) **EP 1 180 431 A1**
(43) Date of publication of application: **20.02.2002**
(21) Application number: 01116863.0
(22) Date of filing: 10.07.2001
(51) Int. Cl.: B32B 5/22, B32B 27/30, B29C 44/24, B44F 7/00, D06N 7/00, B32B 31/04

(54) **Laminate having three-dimensional appearance**

(30) Priority: 18.08.2000 US 644820
(71) Applicant: Armstrong World Industries, Inc., Lancaster Pennsylvania 17603 (US)
(72) Inventor: Eshbach, John R., Jr., Lititz, Pennsylvania 17543 (US); Wright, Ralph W., Jr., Lancaster, Pennsylvania 17603 (US); DeSantis, Craig W., Brunnerville, Pennsylvania 17543 (US)
(74) Representative: Finck, Dieter, Dr.Ing.

(57) **Abstract**

Disclosed are both a decorative laminate and a method for making the decorative laminate. The decorative laminate includes a laminated layer having particulates trapped within a film. The trapped particulates impart the appearance of three-dimensional depth to the decorative laminate. Additionally, a second laminated film having a printed pattern can be laminated to the decorative laminate.

## Description

### FIELD OF THE INVENTION

The present invention relates generally to surface coverings and in particular to a decorative laminate covering.

### BACKGROUND

Sheets of resinous compositions have found widespread use as decorative and wear resistant coverings for a wide range of products. For example, decorative coverings can include coverings for flooring, walls, ceilings, desks, tables and countertops. Additionally, such resinous compositions can be incorporated into surface layers on leather, fabrics, paper, wood, metal and glass, or used in upholstery, drapery, and clothing materials. Sheet materials can also be made with chips or other particulate material.

Generally sheets made with particulate matter fall into two classifications: cushioned or non-cushioned. Cushioned sheets include a substantially continuous layer of foam and are usually made by incorporating solid particulate material into a plastisol coating on top of the foam, followed by gelling and fusing the coating. Non-cushioned sheets do not contain a foam layer and are usually made from sintering or calendering particulate material.

Many processes are known for embedding various particles into a clear PVC plastisol for making decorative patterns. For example, some processes involve the deposition of particles of colored polyvinyl chloride (PVC) having a high carbonate filler or vinyl concentration. Others are arranged to create geometric structures. The particles are placed on the face of the decorative sheet and are then covered by applying a clear plastisol, which can be either transparent, translucent or opaque. The plastisol serves as the binding agent between the particles and the decorative sheet.

Additional examples include using flat chips with a higher softening point than a surrounding matrix and then pressing the chips into the matrix without distorting them. Further methods include consolidating chips into a plastisol by pushing cool chips into a relatively hot plastisol and then heating the resulting structure. Chips may also be placed on the surface of a plastisol and allowed to sink near the surface, or chips may be dropped onto a tacky adhesive and then covered with a transparent or translucent liquid thermoplastic film.

Each of these processes requires the step of placing the decorative particulates directly onto the matrix of the covering and then cementing them in place. When forming a decorative laminate it is most cost effective to apply layers as laminated sheets and not as layers which are built up through deposition. Thus, there is a need for creating a particulate embedded laminate that does not require the added step of depositing particulates directly onto the laminate and then cementing them in place.

### SUMMARY

The present invention includes both a decorative laminate and a method for making the decorative laminate. The decorative laminate includes a laminated layer having particulates trapped within a film. The trapped particulates impart the appearance of three-dimensional depth to the decorative laminate.

The method of manufacturing the decorative laminate comprises laminating a substrate, a film having embedded particles and a printed film to form a 3-dimensional laminate. In one embodiment, a film having embedded particulates is laminated to a substrate to form a laminated face. A printed film is then laminated to the laminated face to form the three-dimensional laminate.

The composition structure of the decorative laminate comprises a substrate having a facing side with a particulate embedded film laminated to the facing side of the substrate. Additionally, the decorative laminate includes a printed film laminated to the particulate embedded film.

A further embodiment includes a method of manufacturing a decorative laminate which includes laminating a film having embedded particulates to a substrate to form a laminated face. The film having embedded particulates or the substrate can further comprise a printed pattern.

An additional embodiment includes a decorative laminate having a substrate with a facing side and a particulate embedded film laminated to the facing side of the substrate. The substrate can further comprise a printed pattern on its facing side.

### BRIEF DESCRIPTION OF THE DRAWINGS

In the drawings:
Figure 1 illustrates a cross section of the decorative laminate;
Figure 2 illustrates an apparatus and method for creating the particulate embedded film which is laminated to the substrate of the decorative laminate of the present invention; and
Figure 3 illustrates an apparatus and method for creating the decorative laminate.

### DETAILED DESCRIPTION

The present invention includes both a decorative laminate and a method for making the decorative laminate. The decorative laminate comprises a substrate having a facing side with a particulate embedded film laminated to the facing side of the substrate and a printed film laminated to the particulate embedded film. The method of manufacturing the decorative laminate comprises laminating a particulate embedded film to a substrate to form a laminated face and then laminating a printed film with at least regions of translucency or transparency to the laminated face to form a 3-dimensional laminate. The embedded particulates of the decorative laminate provide an added appearance of depth to the laminate.

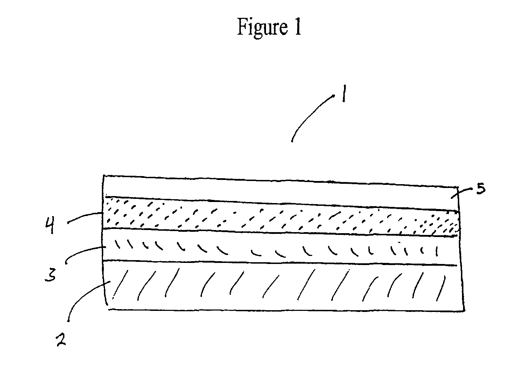

Figure 1 illustrates a cross section of an embodiment of the decorative laminate **1**. Within the drawing there is illustrated four separate layers comprising the decorative laminate. The embodiment shown in Figure 1 illustrates only one possible embodiment, thus not all the layers shown are required for the present invention.

The substrate layer **2** comprises the base of the decorative laminate **1**. The substrate layer **2** can comprise cushioned or non-cushioned sheets and is preferably comprised of a limestone filled vinyl resin composition. The substrate layer **2** has a facing and backing side. Affixed to the facing side is a particulate embedded film **3** and affixed to the backing side can be an adhesive coating (not shown) for installing the decorative laminate **1** to a surface.

The particulate embedded film **3** is preferably a vinyl film wherein particulate matter has been encased within the film. The particulate embedded film is preferably comprised of a vinyl film encompassing particulate matter of either organic or inorganic matter. For example, organic matter can be polyvinyl chloride (PVC) chips and inorganic matter can be marble chips. The term "embedded" is intended to refer to all particulate matter that is either affixed on or within the vinyl film and can also describe matter protruding from the film. The term "particulate" is simply used to denote a substance of matter. The particulate embedded film **3** is laminated to the facing side of the substrate **2** and can either have a printed film **4** laminated to its face, as illustrated in Figure 1, or a pattern printed directly on its face (not shown). In an alternative embodiment, only a nonprinted topcoat is applied to the particulate embedded film **3**.

A printed film **4** is illustrated as being affixed to the face of the particulate embedded film **3** in Figure 1. The printed film **4** is preferably a back-printed film, such that a pattern is printed on the side of the film to be in contact with the particulate embedded film **3**. The printed film **4** is preferably a vinyl film, which is then laminated to the particulate embedded film **3**. Additionally, a wear layer or topcoat **5** can be affixed to the facing side of the printed film **4** to provide added wear and protection for the decorative laminate **1**.

In greater detail, the substrate **2** can be formed of most any vinyl resin and inorganic filler. Typically, the chosen inorganic filler is limestone. It should be understood that most of the substrates normally employed in the surface covering field may be employed to prepare the laminate of this invention so long as the chosen substrate is relatively strong, durable and flexible. The substrate **2** can also comprise multiple component layers. Thus, most any woven, nonwoven, felted or sheet of synthetic or natural material may also be used as the substrate layer **2**.

Essentially, the substrate **2** can be formed of a vinyl blend comprising a free-flowing homogeneous mixture of a thermoplastic vinyl resin, vinyl plasticizers, fillers, pigments, and a vinyl stabilizer. The fillers are typically inorganic matter and may include limestone, silica, diatomaceous earth, clay and mixtures thereof.

The resin component of the substrate is preferably a vinyl resin. More specifically, the vinyl resin is a polymeric material obtained by polymerizing compounds containing at least one -CH=CH₂ radical. Useful vinyl resins include homopolymers, such as polyvinyl chloride, polyvinyl acetate, polyvinyl propionate, polyvinyl butyrate, polymerized vinylidene chloride, polymerized acrylic acid, polymerized ethyl acrylate, polymerized methyl acrylate, polymerized propyl acrylate, polymerized butyl acrylate, polyethylene, polypropylene, and the like; copolymers of the above with each other such as vinyl chloride-vinyl acetate copolymer, vinylidene chloride-vinyl chloride copolymer, methyl methacrylate-vinyl chloride copolymer, methyl acrylate-ethyl acrylate copolymer, ethyl acrylate-butyl acrylate copolymer, ethylene propylene copolymers, ethylene styrene copolymers, and the like and copolymers of the above with other monomers copolymerizable therewith, such as vinyl esters, including vinyl bromide, vinyl fluoride, vinyl chloroacetate, vinyl alkyl sulfonates, trichloroethylene and the like; vinyl ethers such as vinyl ethyl ether, vinyl isopropyl ether, vinyl chloroethyl ether and the like; cyclic unsaturated compounds such as styrene, chlorostyrene, coumarone, vinyl pyridine and the like; maleic and fumaric acid and their derivatives such as diethyl maleate, dibutyl fumarate and the like; unsaturated hydrocarbon such as ethylene, propylene, butylene and the like; allyl compounds such as allyl acetate, allyl chloride, allyl ethyl ether, and the like; conjugated and cross-conjugated unsaturated compounds such as butadiene, isoprene, chloroprene, 2,3-dimethylbutadiene-1,3, divinyl ketone and the like. The monomers listed above are useful in preparing copolymers with a vinyl resin and can be used as modifiers in the polymerization, in which case they may be present in an amount of a few percent, or they can be used in larger quantities, up to as high as 40 percent by weight of the mixture to be polymerized.

A plasticizer for the vinyl resin may be added to the vinyl resin of the substrate. Suitable plasticizers for the vinyl resin include ester type plasticizers such as tributyl phosphate, dioctyl phthalate, dipropylene glycol dibenzoate, phenyl phosphate, dibutyl tartrate, amyl tartrate, butyl benzyl benzoate, dibutyl sebacate, dioctyl adipate, didecyl adipate and the like, rubbery plasticizers, such as butadiene-styrene copolymer, butadiene-acrylonitrile copolymer, ethylene vinyl acetate (EVA), and the like, and other materials which function as plasticizers, such as epoxidized drying oils, aromatic hydrocarbon condensates and the like. Where certain flexible soft vinyl resins are used, such as polymers containing large proportions of ethyl acrylate, no plasticizer is needed.

The particulate embedded film may be formed from most any plastisol, organosol, or melt processed vinyl resin material. For example, the plastisol or organosol may be a thermoplastic polymer or homopolymer of polyvinyl chloride, a copolymer of polyvinyl chloride and one or more other co-polymerizable resins, a block polymer of polyvinyl chloride and one or more other co-polymerizable resins, a graft polymer of polyvinyl chloride and one or more other co-polymerizable resins. Additionally, an acrylic resin capable of being dispersed into a plastisol may be included. Melt processable materials can include homopolymers or copolymers of polyvinyl chloride, a polyamide, a polyester, polyolefins such as ethylene, propylene or polystyrene, a polycarbonate, and an acrylic. The particulate embedded film may have most any thickness that is practical for application. For example, in one embodiment, the film may have a thickness ranging between 1/16 to 1/8 inches. In another embodiment the film may have a thickness ranging from 5 to 20 mils. The vinyl film may be substantially clear or substantially opaque. The opaque film may contain pigments for providing color or contrast.

The embedded particulates are intended to give the resulting decorative laminate a 3-deminsional appearance such that the particulates give the illusion of depth to the decorative laminate. The particulates are primarily chosen for their decorative value, thus most any particle may serve such purpose. For example, the particulates may be formed of polymeric compositions, resinous compositions, mica, ceramics, metals, rubbers and combinations. The particulates may also be substantially clear or substantially opaque and can contain traditional pigments or enhanced pigments such as pearlescent pigments to provide color and contrast. In one embodiment, it is desired that the particulates be opaque when the film is clear and clear when the film is opaque.

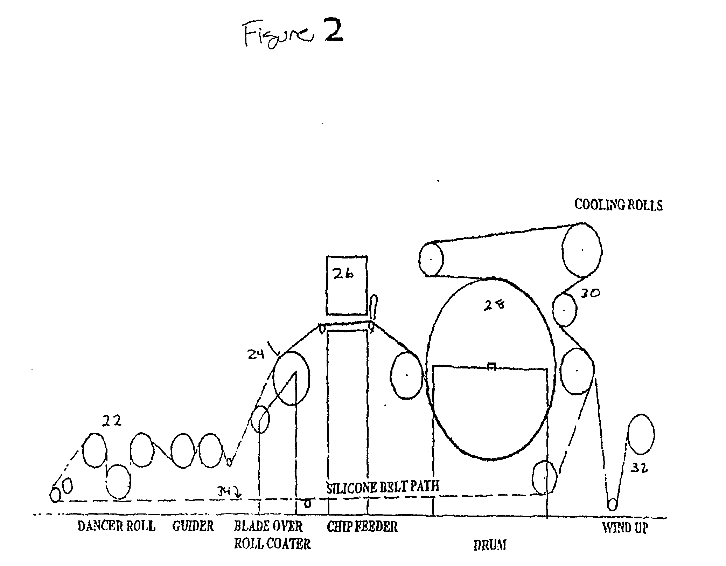

As illustrated in Figure 2, the particulate embedded film **3** can be manufactured as a gelled plastisol sheet film made in a continuous process. The use of release paper or felt carrier is not needed since the continuous belt **34** is preferably coated with a non-stick surface material such as silicone or Teflon® which provides a sufficient release surface for the plastisol sheet. Of course, release paper or felt can be used, but such is not preferred since both are essentially single use release agents and add to the cost of processing the film.

The dancer rolls **22** provide the initial tension in the continuous belt **34**. The dancer rolls **22** are followed by a blade over roll coater assembly **24** which coats the continuous belt **34** with the plastisol. Other coating devices such as roll coaters, screen coaters, etc. can be utilized. The chip feeder **26** next distributes the particulates or chips onto the plastisol. The chips may be distributed at random or in a desired pattern. After the chips have been distributed, the continuous belt **34** then proceeds to a large heated drum **28** where the plastisol is gelled and fused to the particulates to create the particulate embedded film. The film can then be cooled over cooling rollers **30** and separated from the continuous belt **34** in the wind up **32**. This example is only given to illustrate and teach one possible method of creating a particulate embedded film. It is recognized that there are other possible methods of creating a particulate embedded film including melt processing methods.

The printed film **4** is preferably a back-printed film wherein the inked side of the film is in contact with the particulate embedded film. The printed film is laminated to the particulate embedded film and is preferably comprised of a substantially clear acrylic or polyvinyl chloride film having a printed pattern. The composition of the printed film is not limited, and printed films such as polyester, polyolefin, etc. can be used, depending upon compatibility with the substrate and particulate embedded film composition. In an alternative embodiment, the film may also contain pigments. Pigmentation is preferably limited to colorations that do not substantially obscure the printed matter on the film. The non-printed side of the printed film can perform as the wearlayer in the final product structure, or in a further embodiment, the printed film further contains a topcoat on the non-printed side of the film. The composition of the topcoat is not limited, but is preferably formed from compositions such as those described in US Patent Nos. 5,843,576 and 5,543,232, and 5,719,227 which are incorporated herein by reference.

In an alternative embodiment, a printed pattern may be printed directly onto the upper surface (face) of the particulate embedded film. The pattern can be printed before the particulate embedded film is laminated to the substrate or after lamination. A wear layer or a topcoat can be subsequently directly applied or laminated to the printed facing side of the particulate embedded film.

In another embodiment, the face of substrate **2** can comprise a printed pattern which can be used in combination with the embedded film 3 and printed film 4 to produce enhanced visual effects. For example, if the substrate **2** comprises a chemically embossable foamable layer, the printed pattern can contain chemical embossing inhibitors or accelerators to impart a texture to the final structure after heating and further processing of the laminated composite. Alternatively, the bottom side of the particulate embedded film **3** can be printed with a design using chemical embossing inhibitors or accelerators, to similarly impart a texture to the final structure containing a chemically embossable foamable layer, after heating and further processing of the laminated composite. Chemical embossing inhibitor and accelerator technology is described in US Patent Nos. 3,292,108, 4,147,104, and 4,264,957, which are incorporated herein by reference.

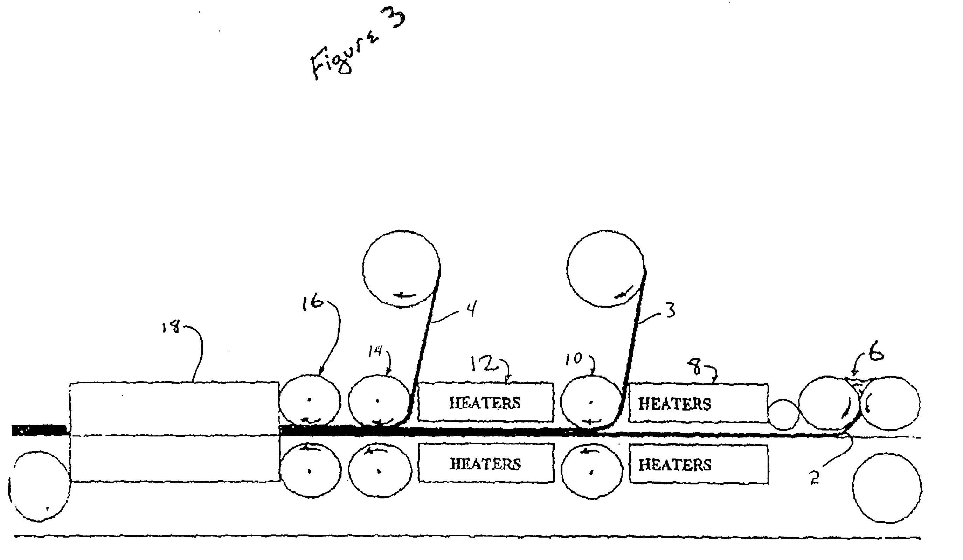

Illustrated in Figure 3, a method and apparatus are described for creating a decorative laminate of the present invention. The illustrated process comprises two separate lamination steps. Within the lamination process it is contemplated that adhesives may be applied if desired, but adhesives are typically not necessary for most plastics. The first lamination step comprises laminating the particulate embedded film **3** to the substrate **2** and the second step comprises laminating the printed film **4** to the embedded film **3**. Once laminated, the decorative laminate can be embossed and punch pressed into decorative tiles.

In greater detail, the substrate layer **2** is formed in the mill **6**. A heated fluxed mixture of vinyl resin and limestone filler is placed on mill **6** to form a substrate sheet which is then heated to a temperature between about 275°F to about 325°F in a set of heaters **8**. The heaters **8** can be of any radiant devise, gas, or other heat source. Once heated, the substrate **2** is laminated with the particulate embedded film **3** in the first lamination station **10**. Once laminated, the laminated substrate is then heated again in a second set of heaters **12** to a temperature between about 275°F to about 325°F. Once heated, the laminated substrate is then laminated with the printed film **4** in a second lamination station **14**. After the second lamination station **14**, the decorative laminate may then be embossed with a desired design before the laminate cools. The laminate is embossed mechanically using various embossing rollers **16**. This embossing can be in-register with the print pattern or an overall embossing texture. Once embossed, the laminate can be cooled in a water bath **18** and then punched pressed into decorative tiles by a punch press. The above example is given to illustrate one embodiment of creating the decorative laminate **1**. It is recognized that there can be additional steps added to the described process, including the step of printing a pattern directly on the particulate embedded film **3** instead of laminating the printed film **4** or in addition to the printed film **4**. Additionally, if a cushioned sheet substrate **2** is employed, chemical as well as mechanical embossing techniques and processes can be employed.

While specification embodiments have set forth as illustrated and described above, it is recognized that variations may be made with respect to disclosed embodiments. These can include other known continuous or discontinuous process variations, as well as the use of compatible adhesive layers in the lamination processes. Therefore, while the invention has been disclosed in various forms only, it will be obvious to those skilled in the art that many additions, deletions and modifications can be made without departing from the spirit and scope of this invention, and no undue limits should be imposed except as set forth in the following claims.

## Claims

1. A method of manufacturing a decorative laminate comprising the steps of:
laminating a substrate, a film having embedded particulates and a printed film to form a 3-dimensional laminate.

2. The method of claim 1, wherein the film having embedded particulates is laminated to the substrate to form a laminated face.

3. The method of claim 2, wherein the printed film is laminated to the laminated face.

4. The method of claim 1, wherein the film has embedded particulates which are substantially clear and comprises a polyvinyl chloride resin.

5. The method of claim 1, wherein the film having embedded particulates comprises a film selected from the group consisting of a plastisol, organosol, a melt processed composition of a thermoplastic polymer and combinations thereof.

6. The method of claim 1, wherein the embedded particulates are substantially transparent, translucent, opaque, or combinations thereof.

7. The method of claim 1, wherein the embedded particulates are comprised of materials selected from the group consisting of resinous compositions, mica, ceramics, metals and combinations thereof.

8. The method of claim 7, wherein the polymeric and resinous compositions are polymers selected from the group consisting of acrylics, polyamides, polyolefins, polycarbonates, polyvinyl chloride, polyesters and combinations thereof.

9. The method of claim 1, wherein the printed film has a printed pattern on the facing side and further including printing a pattern on a backside of the printed film.

10. The method of claim 1, wherein the printed film comprises a protective top coat.

11. The method of claim 1, further including mechanically embossing at least one surface texture onto the 3-dimensional laminate.

12. The method of claim 11, further including embossing the surface texture in register onto the 3-dimentsional laminate in register with the printed pattern of the printed film or particulates of the embedded particulate film.

13. The method of claim 1, wherein the substrate further comprises a chemically embossable foamable layer having a printed pattern containing chemical embossing inhibitors, accelerators or combinations thereof whereby a texture can be imparted to 3-dimensional laminate.

14. The method of claim 1, wherein the film having embedded particulates has a printed pattern containing chemical embossing inhibitors, accelerators or combinations thereof.

15. A decorative laminate comprising:
a substrate having a facing side;
a particulate embedded film laminated to the facing side of the substrate; and
a printed film laminated to the particulate embedded film.

16. The laminate of claim 15, wherein the embedded film is substantially clear and comprises a polyvinyl chloride.

17. The laminate of claim 15, wherein the embedded film comprises at least one pigment.

18. The laminate of claim 15, wherein the embedded film comprises a film selected from the group consisting of a plastisol, organosol, and a melt processed composition of thermoplastic polymer.

19. The laminate of claim 15, wherein the particulate embedded film contains particulates which are substantially translucent, opaque, or a combination thereof.

20. The laminate of claim 19, wherein the particulates are comprised of materials selected from the group consisting of resinous compositions, mica, ceramics, metals and combinations thereof.

21. The laminate of claim 15, further including a topcoat applied to the printed film.

22. The laminate of claim 15, wherein the decorative laminate has a mechanically embossed surface texture.

23. The laminate of claim 22, wherein the surface texture is embossed in register with the printed pattern of the printed film or particulates of the particulate embedded film.

24. The laminate of claim 15, wherein the substrate further comprises a chemically embossable foamable layer having a printed pattern containing chemical embossing inhibitors, accelerators or combinations thereof whereby a texture can be imparted to 3-dimensional laminate.

25. The laminate of claim 24, wherein the decorative laminate has a mechanically embossed surface texture.

26. The laminate of claim 15, wherein the particulate embedded film has a printed pattern containing chemical embossing inhibitors, accelerators or combinations thereof.

27. The laminate of claim 25, wherein the decorative laminate has a mechanically embossed surface texture.

28. A decorative laminate comprising:
a substrate having a facing side;
a particulate embedded film; and
a printed pattern adjacent to the particulate embedded film.

29. The laminate of claim 28, wherein the particulate embedded film is laminated to the facing side of the substrate.

30. The laminate of claim 28, wherein the embedded film is substantially clear and comprises a polyvinyl chloride.

31. The laminate of claim 28, wherein the particulate embedded film contains particulates which are substantially transparent, translucent, opaque, or combinations thereof.

32. The laminate of claim 31, wherein the particulates are comprised of materials selected from the group consisting of resinous compositions, mica, ceramics, metals and combinations thereof.

33. The laminate of claim 28, further including a topcoat forming an exposed surface opposite the substrate.

34. The laminate of claim 28, further including a mechanically embossed surface texture embossed in register onto the decorative laminate in register with particulates of the particulate embedded film or the printed pattern.

35. The laminate of claim 28, wherein the substrate further comprises a chemically embossable foamable layer having a printed pattern containing chemical embossing inhibitors, accelerators or combinations thereof whereby a texture can be imparted to 3-dimensional laminate.

36. A method of manufacturing a decorative laminate comprising the steps of:
printing a pattern onto at least one surface of a substrate or a particulate embedded film; and
laminating the particulate embedded film to the substrate.

37. The method of claim 36, wherein the particulate embedded film is substantially clear and comprises a polyvinyl chloride.

38. The method of claim 36, wherein the embedded particulates of the particulate embedded film are comprised of materials selected from the group consisting of polymeric compositions, resinous compositions, mica, ceramics, metals, rubbers and combinations thereof.

39. The method of claim 36, further including applying a topcoat to the particulate embedded film.

40. The method of claim 36, further including mechanically embossing at least one surface texture in register onto the decorative laminate in register with the printed pattern or particulates.

41. The method of claim 36, wherein the substrate further comprises a chemically embossable foamable layer having a printed pattern containing chemical embossing inhibitors, accelerators or combinations thereof whereby a texture can be imparted to 3-dimensional laminate.

42. The method of claim 36, wherein the particulate embedded film has a printed pattern containing chemical embossing inhibitors, accelerators or combinations thereof.

43. A decorative laminate comprising:
a substrate having a facing side;
a particulate embedded film laminated to the facing side of the substrate; and
a topcoat affixed to the particulate embedded film opposite the substrate.

44. The laminate of claim 43, wherein the embedded film is substantially clear and comprises a vinyl film.

45. The laminate of claim 43, wherein the embedded particulates are comprised of materials selected from the group consisting of resinous compositions, mica, ceramics, metals and combinations thereof.

46. The laminate of claim 43, further including a mechanically embossed surface texture embossed onto the decorative laminate.

47. The laminate of claim 43, wherein the surface texture is embossed in registered onto the decorative laminate in register with particulates of the particulate embedded film.

48. The laminate of claim 43, wherein the substrate further comprises a chemically embossable foamable layer having a printed pattern containing chemical embossing inhibitors, accelerators or combinations thereof whereby a texture can be imparted to 3-dimensional laminate.

49. The laminate of claim 43, wherein the film particulate embedded film has a printed pattern containing chemical embossing inhibitors, accelerators or combinations thereof.
